# EUROPEAN PATENT APPLICATION

(11) **EP 2 573 702 A2**
(43) Date of publication of application: **27.03.2013**
(21) Application number: 12075103.7
(22) Date of filing: 13.09.2012
(51) Int. Cl.: G06F 21/82, G06F 21/60

(54) **Internet transaction security**

(30) Priority: 23.09.2011 NL 1039066
(71) Applicant: De Vreede, A.M.J., 2023 GE Haarlem (NL)
(72) Inventor: De Vreede, A.M.J., 2023 GE Haarlem (NL)

(57) **Abstract**

In a system for secure data transmission from a client to a server, a client comprises at least one client data input device, a client data processing device and an input data validating device coupled between at least one client data input device and the client data processing device. The input data validating device is associated with an identification code and a private key associated with a public key. The input data validating device can operate in at least two of a non-secured mode of operation, a secured mode of operation, and a secret mode of operation. The input data validating device receives input data generated by each client data input device, and collects the input data, in time order of receipt, in a data buffer. Depending on the mode of operation, the buffered input data is secured, and transmitted to the server by the client data processing device. The server executes a server application and stores the public key and the associated identification code of the input data validating device.

## Description

### FIELD OF THE INVENTION

The invention relates to the field of internet transaction security, and more specifically to a system, client, server, data input validating device, method and computer software for secure data transmission between a client and a server.

The invention relates to protecting the integrity of data inputted at a data input device by a user to be submitted to a web page of a web application run on a server. The invention further relates to protecting the confidentiality of an amount of input, e.g. a password or any other secret code, to a web application. These kinds of protection may be used e.g. in electronic transaction processes such as electronic banking, data entry, messaging, remote process control, electronic voting, etc..

### BACKGROUND OF THE INVENTION

For a web application (computer data communication program for exchanging data over a telecommunication network such as the Internet) such as, but not limited to, a web application that a bank uses for its customers for electronic banking (e-banking, also called home banking), the integrity of received data is important. A typical e-banking process comprises a plurality of steps, which are described below by way of example.

Initially, in the web application a user (customer) at a client side should identify and authenticate himself, to prove that the user is the person he or she claims to be. For this purpose, banks often equip each user with a security token, such as a calculator type of device having a keypad to enter digits, and a display to check the entered input, and to read any output. Only the authorized user is supposed to own both the security token and a code to unlock the security token. A challenge sent by the bank to the user must be encrypted by the user using the security token and a response generated by the security token of the user must be entered into a web page generated by the web application. The web application checks the response to analyze if the right security token was used. If this is the case, it is assumed that the user sending the response is authorized to perform a desired transaction, and the user is identified and authenticated.A similar process (signing process) may be used when the user enters and sends (submits) transactional data. Transactional data, in this banking web application case, are data that may comprise account numbers and amounts of money to be transferred. The web application returns transaction details or more often just a summary thereof, for verification, and another challenge to the user. If the user agrees with the information presented by the web application, the security token is used by the user to produce a response. Thereto, the response is entered on a web page displayed on a display of a user device, and sent (submitted) to the web application. Only if the entered response is the response expected by the web application, the web application will initiate the transaction.

Such a transaction process, however, is easily manipulated by malware (malicious software). Data entered by the user (e.g. an account number) can be changed by the malware without the user noticing. As a consequence, the bank receives a transaction order for transferring money to a fraudulent account not intended by the user. The information that the web application of the bank sends back to the user may also be manipulated by the malware, to show the information the user expects. Then, the user will, as a matter of course, sign this fraudulent transaction.

Such a malware manipulated process, or a variation of this process, nowadays is the cause of enormous financial losses to both users/customers and banks worldwide.

In view of the above, a need exists to guarantee that all input into a web page of a web application is exactly what a legitimate user actually inputted.

### SUMMARY OF THE INVENTION

It would be desirable to provide an improved system and method of securing data transmission between a client and a server wherein both the client and the server may be sure that the input data generated on client data input devices by a user are identical to the data received by the server.

To better address the above concerns, in a first aspect of the invention a system for secure data transmission from a client to a server is provided, the system comprising:
a client comprising at least one client data input device, a client data processing device and an input data validating device coupled between the at least one client data input device and the client data processing device,
wherein the input data validating device is associated with an identification code and a private key associated with a public key, and the input data validating device is configured for operating in at least two of a non-secured mode of operation, a secured mode of operation, and a secret mode of operation,
wherein, in the non-secured mode of operation, the input data validating device is configured for:
   (a1) receiving input data generated by each client data input device;
   (b1) collecting the input data, in time order of receipt, in a data buffer, wherein the data buffer stores buffered input data; and
   (c1) releasing the buffered input data to the client data processing device for transmission to the server,
wherein, in the secured mode of operation, the input data validating device is configured for:
   (a2) receiving input data generated by each client data input device;
   (b2) collecting the input data, in time order of receipt, in a data buffer, wherein the data buffer stores buffered input data;
   (c2) using the private key and a timestamp to generate a digital signature of the buffered input data; and
   (d2) releasing the buffered input data, the digital signature, and the identification code to the client data processing device for transmission to the server,
wherein, in the secret mode of operation, the input data validating device is configured for:
   (a3) receiving input data generated by each client data input device;
   (b3) collecting the input data, in time order of receipt, in a data buffer, wherein the data buffer stores buffered input data;
   (c3) releasing placeholders to the client data processing device;
   (d3) generating an encryption key based on the buffered input data;
   (e3) generating encrypted data by encrypting the buffered input data, the public key and the identification code, using the encryption key; and
   (f3) releasing the encrypted data to the client data processing device for transmission to the server,
a server configured to execute a server application, wherein the server is configured to store the public key and the associated identification code of the input data validating device,
wherein, in the non-secured mode of operation of the input data validating device, the server application is configured for:
   (d1) receiving input data from the client data processing device, the input data being generated by each client data input device; and
   (e1) processing the input data,
wherein, in the secured mode of operation of the input data validating device, the server application is configured for:
   (e2) receiving the buffered input data, the digital signature, and the identification code from the client data processing device;
   (f2) validating the buffered input data based on the public key associated with the identification code; and
   (g2) if the validation is positive, processing the buffered input data,
wherein, in the secret mode of operation of the input data validating device, the server application is configured for:
   (g3) receiving the encrypted buffered input data from the client data processing device;
   (h3) decrypting the encrypted buffered input data based on the encryption key;
   (i3) validating the decrypted buffered input data based on the encryption key; and
   (j3) if the validation is positive, processing the buffered input data.

In a further aspect of the invention, a method of secure data transmission from a client to a server is provided, the method comprising:
providing an input data validating device coupled between at least one client data input device and a client data processing device, the input data validating device being associated with an identification code and storing a private key associated with a public key, the input data validating device being configured for operating in at least two of a non-secured mode of operation, a secured mode of operation, and a secret mode of operation,
   - in the non-secured mode of operation, the input data validating device:
      (a1) receiving input data generated by each client data input device;
      (b1) collecting the input data, in time order of receipt, in a data buffer, wherein the data buffer stores buffered input data; and
      (c1) releasing the buffered input data to the client data processing device for transmission to the server,
   - in the secured mode of operation, the input data validating device:
      (a2) receiving input data generated by each client data input device;
      (b2) collecting the input data, in time order of receipt, in a data buffer, wherein the data buffer stores buffered input data;
      (c2) using the private key and a timestamp to generate a digital signature of the buffered input data; and
      (d2) releasing the buffered input data, the digital signature, and the identification code to the client data processing device for transmission to the server,
   - in the secret mode of operation, the input data validating device:
      (a3) receiving input data generated by each client data input device;
      (b3) collecting the input data, in time order of receipt, in a data buffer, wherein the data buffer stores buffered input data;
      (c3) releasing placeholders to the client data processing device;
      (d3) generating an encryption key based on the buffered input data;
      (e3) generating encrypted data by encrypting the buffered input data, the public key and the identification code, using the encryption key; and
      (f3) releasing the encrypted data to the client data processing device for transmission to the server,
providing a server executing a server application, the server storing the public key and the associated identification code of the input data validating device,
   - in the non-secured mode of operation of the input data validating device, the server application:
      (d1) receiving input data from the client data processing device, the input data being generated by each client data input device; and
      (e1) processing the input data,
   - in the secured mode of operation of the input data validating device, the server application:
      (e2) receiving the buffered input data, the digital signature, and the identification code from the client data processing device;
      (f2) validating the buffered input data based on the public key associated with the identification code; and
      (g2) if the validation is positive, processing the buffered input data,
   - in the secret mode of operation of the input data validating device, the server application:
      (g3) receiving the encrypted buffered input data from the client data processing device;
      (h3) decrypting the encrypted buffered input data based on the encryption key;
      (i3) validating the decrypted buffered input data based on the encryption key; and
      (j3) if the validation is positive, processing the buffered input data.

The input data validating device is an electronic device with embedded software, either manufactured as a separate device, or integrated into a so-called client (desktop computer, laptop, smartphone, tablet-computer etc.) or even into a peripheral device (client data input device) like a keyboard. This device, or actually its functionality, makes it possible for a user to safely communicate to a server (hosting a web application) over the Internet. Malware can interfere with (e.g. block) this communication, but that will not necessarily result in unwanted or fraudulent transactions. An idea behind the invention is that input (data entered by a user on a client data input device) should be secured immediately, before malware can change it.

The input data validating device is located between client data input devices, also called human interface devices (such as a keyboard and a mouse or a touch-screen) at one side and a client data processing device (computer, etc.) at the other side. It is assumed that the client data processing device is vulnerable to malware infections because it is re-configurable, while the client data input devices are not.

All signals relating to keystrokes on a keyboard, all movements of a mouse and all other activities on client data input devices are collected in the input data validating device, having a plurality of input ports, and an output port. As said signals appear at one of the input ports, they may be relayed through the output port to the client data processing device. In this way, the user will see his input appear on a computer display as expected. However, in the meantime, the input data validating device logs all input into an internal data buffer. The data buffer may comprise different buffer portions.

The signals of client data input devices are electrical signals that contain coded information about the actual keystroke, movement etc. A keystroke e.g. results into a number of electrical signals that represent a number of bytes that, in turn, hold information about which key it concerned and if the key was pressed down or released. Input information is stored and can be analyzed to recognize 'submit' situations (e.g. <ENTER> key pressed down, left mouse key released, etc.). It is, however, important to realize that the collected signals are not necessarily the well-known ASCII of EBCDIC coded characters. A convenient implementation may translate incoming sequences of bytes into an internal code where often appearing signals consume least storage in the internal buffer.

On its way out of the input data validating device, the information sent will be re-translated or converted into a format expected by the client data processing device. This client data processing device will therefore not even notice the presence of the input data validating device and will handle all input that was relayed through the input data validating device, or generated therein, as genuine keyboard signals, mouse activities, etc..

In a secured mode of operation, when a possible 'submit' signal is entered by the user (e.g. <ENTER> key pressed down, left mouse key released, etc.), the input data validating device will recognize this and at first will block this signal. Using a private key, the input data validating device then establishes a timestamp and calculates a digital signature for all collected data and the timestamp. Both collected data and the signature are then entered into the web page by the input data validating device, together with an identification code of the input data validating device. Finally, the submit signal is released to the client data processing device, and the web page will be submitted by the client data processing device to a server running a web application.

The web application will receive the (possibly manipulated) 'ordinary' input, but also the collected data and the signature entered by the input data validating device. The 'ordinary' input may be totally ignored. The data collected by the input data validating device contains all information necessary to reproduce everything the user entered. The signature can be used to validate its integrity. The identification code of the input data validating device is available to the web application through the submitted web page to find the right decryption key (public key associated with the private key of the input data validating device) in the administration behind the web application.

The way in which a digital signature is produced and how this is used is beyond the scope of this description and is not part of this invention. Providing digital signatures is a commonly used technique nowadays.

Protecting data confidentiality is also possible. Of course, all data that reaches the client data processing device is prey to malware. In case of secret data, like passwords, this is something to avoid. For this, the input data validating device may have another mode of operation apart from the previously described secured mode of operation. To protect data against exposure to malware, the input data validating device can be switched into a secret mode of operation. In this way, the operation of the input data validating device is as follows.

Input from data input devices like a keyboard (or similar, like a soft keypad on a smartphone or tablet) is collected, but not relayed to the client data processing device. Instead, each keystroke will result in sending a pre-defined placeholder to the client data processing device. A placeholder is another character that has nothing to do with the actual character typed in. Often, a character is used that appears on the screen as a bullet (•) or an asterisk (*). In this way, a user will only see placeholders appear on the screen (which is usually the case if passwords etc. are entered). More important, malware will also receive only placeholders, not the actual input data.

When the input data validating device detects a submit situation (e.g. <ENTER> key pressed down, left mouse key released, etc.), it uses the collected 'secret' input as an encryption key. All data (even collected before and after the input data validating device was in the secret mode of operation, and including the secret input itself) as well as the input data validating device's identification code and public key are encrypted with the encryption key. The encrypted result is then released to the client data processing device. The receiving web application is supposed to know the encryption key and can (if the customer typed in the right 'secret' input used as the encryption key) decrypt the result. If the wrong 'secret' input was entered, the result will simply not contain the key itself, which is easy to detect.

Accordingly, the user can apply to a new web application and get a secret application code from the owner of the web application (using covert channels to send the code to the user). The web application can decrypt the message with the application code and thus receives the public key of the input data validating device used by that user and the identification code of the input data validating device. Thus, the web application can store the public key in its administration in combination with the identification code, and with other user-related information (name, account number, etc.).

These and other aspects of the invention will be more readily appreciated as the same becomes better understood by reference to the following detailed description and considered in connection with the accompanying drawings in which like reference symbols designate like parts.

### BRIEF DESCRIPTION OF THE DRAWINGS

Figure 1 depicts a system of interconnected or coupled data processing entities taking part in an execution of a web application.
Figure 2 depicts a flow diagram of some aspects of operation of an input data validating device.

### DETAILED DESCRIPTION OF EMBODIMENTS

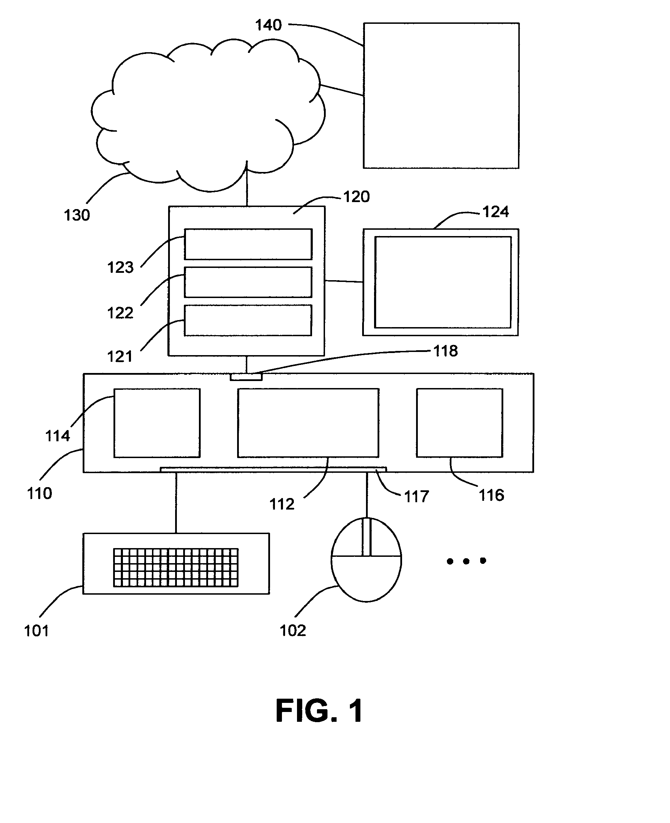

Figure 1 depicts a diagram of interconnected or coupled data processing entities in an embodiment of the invention. Lines between entities indicate a wired or wireless connection or coupling between such entities. Each connection or coupling is configured to carry data traffic for communication between entities to exchange information, and to control processing at the entities.

Data and/or commands are generated by use of a plurality of client data input devices 101, 102, .... Client data input device 101 is schematically illustrated as a keyboard which may be a traditional keyboard having mechanically operable keys generating electrical signals, or it may comprise a touch detection device such as a touch screen having a keyboard function, i.e. allowing characters, control characters and symbols to be input. Client data input device 102 is schematically illustrated as a mouse device, which may be any pointing device to select a position and/or activate an application function through a user manipulation. Other touch or user action detection devices may be comprised in the system, such as a sound recording device, for example a microphone, to control speech recognition software, an image recording device, for example a camera or a scanner, a video recording device or any other device to generate input data, such as a data processing device similar to client data processing device 120 to be described in more detail below.

The client input data devices 101, 102, ... are connected or coupled to an input data validating device 110 configured to receive input data from the client input data devices 101, 102, ... through an input interface 117. The input data validating device 110 comprises a (data) processor 112, a first internal buffer 114 and a second internal buffer 116. The first internal buffer 114 and the second internal buffer 116 are memories connected or coupled to the processor 112, and configured to store input data input by the client input data devices 101, 102, ... after processing thereof by the processor 112. The first internal buffer 114 and the second internal buffer 116 may part of a single memory device, or may be separate memory devices. The input data validating device 110 may comprise other memories, e.g. a permanent or semi-permanent memory to store software to operate the input data validating device 110, and to store data components such as an encryption key and an identification code identifying the input data validating device 110.

The input data validating device 110 is connected or coupled to the client data processing device 120, which may be a general purpose computing device, through an output interface 118. The input data validating device 110 may also be included or integrated in a housing of a client data processing device where it is connected or coupled between client data input devices 101, 102, ... thereof and remaining parts of the client data processing device 120.

The client data processing device 120 comprises a (data) processor 121, at least one memory device 122, and a communication unit 123 configured to provide communication with other computer devices. An output device 124 may be connected or coupled to, or comprised in the client data processing device. The memory device 122 may comprise permanent memory, such as read only memory, ROM, and non-permanent memory, such as random access memory, RAM. The client data processing device 120 may comprise a desktop computer, a laptop computer, a tablet computer, a personal digital assistant, PDA, a smartphone, and/or any other device comprising a processor 121, a memory device 122, communication unit 123 and optional output device 124. The processor 121 may comprise one or more data processing units. The output device 124 may comprise a display such as a screen display or a touch screen, a speaker, and/or any other device to provide output from the client data processing device 120. The communication unit 123 is configured to transmit and receive data from other devices, possibly in various data formats and according to various standards or protocols.

The client data processing device 120 may be connected or coupled to a data communication network 130, such as the Internet, a local area network, LAN, a telecommunication network, or any other network configured to provide data communication between electronic devices. Through the data communication network 130, the client data processing device 120 may access a server 140 configured to execute a server application.

Every user has to install the input data validating device first before it can be used.

Of course it can be used over and over. Re-usability means it can also be used with another web application. For this, some information has to be sent to that web application first. Installation, use and re-use are separately described below.

### INSTALLATION

For installation, either the user simply connects the input data validating device 110 between the peripherals (data input devices 101, 102, ... such as mouse, keyboard, etc.) and the client data processing device 120, or a manufacturer (of a computing device such as a laptop, tablet, etc.) must integrate it into his product, between the 'non-user-configurable' data input device part and the rest of the product. Note that this is done initially only. The input data validating device 110 is reusable and is not necessarily removed any more. For use with different protected web applications, the same input data validating device 110 can be used again and again.

### USE

A typical use case may look like this. In this example, separate data input devices 101, 102, ... (so: not integrated in an input data validating device 110, or in a client data processing device 120) are described.

The input data validating device 110 will automatically switch on if it is powered on through its wired connection (e.g. a USB type connection) with the client data processing device 120. The input data validating device 110 switches on in a non-secured mode of operation. All input is now relayed from the data input devices 101, 102, ... to the client data processing device 120 unmodified, and accordingly the user will not notice the presence of the input data validating device 110 yet. System logon, use of all sorts of software, etc. will not change. In the meantime, the input data validating device 110 does collect or buffers every input, though, but simply removes all collected data from its buffers 114, 116 once a 'submit' action is detected. Data is collected only for the situation that the user desires to switch to a secured mode of operation. In such a case, all input should still be signed or encrypted afterwards.

The user now opens protected web pages, being web pages that expect the use of an input data validating device 110. If, e.g. after notification on the web page, the user types a predefined input data sequence <CTRL>, <CTRL>, '2', the input data validating device 110 will switch into a secured mode of operation. From now on, all collected data will be digitally signed and added to the web page as it is submitted. The web page contains an extra, invisible field of which the user is not aware. At submit, the client data processing device 120 therefore first receives a placement signal (e.g. three subsequent <CTRL> key up signals) from the input data validating device 110, and a client-side script will move the input cursor into the invisible field. The input data validating device 110 continues to release signals and thus places all collected data and the signature, together with a unique identification code of the input data validating device 110, into the invisible field. Finally the submit signal (e.g. <ENTER> key down, left mouse key released, etc.) is received by the client data processing device, which causes the web page to be submitted, over the Internet, to the web application.

The user can continue his session and will eventually be prompted by the web application to switch off protection by inputting data sequence <CTRL>, <CTRL>, '1'. The input data validating device 110 accepts this as a command to switch to a non-secured mode of operation.

A digital signature is generated as follows. The input data validating device 110 contains a unique internal private key (not even known to the user). A hash function, like SHA1, is used to calculate a hash value (also called a digest) of the collected input. This hash value is then encrypted with the private key. The result is a digital signature, that depends on both the collected input and the private key. Without this private key, it would have been impossible to generate this signature on this specific input.

The private key of the input data validating device 110 is kept secret. The input data validating device 110 also has a related public key. The web application keeps a copy of this public key (and public keys of input data validating devices 110 of other users) in an administration. Based on the identification code associated with the input data validating device 110, the web application selects the right public key when decrypting the digital signature generated by a particular input data validating device 110. The result is - if everything is all right - the previously mentioned hash value. The web application can easily re-calculate the same hash value on the input that was received. Both hash values should be equal. If so, this is a proof that both input and signature are not tampered with by malware (or any other interfering entity).

It is noted that the techniques to encrypt, sign and verify data are known as such. Information security nowadays leans heavily on these techniques and countless products and implementations are built around these techniques. Newer encryption techniques will evolve. New input data validating devices 110 may apply up-to-date encryption techniques.

Of course, there is also the 'usual' submitted input data in the message that the web application receives. This input data contains typed-in characters, etc., but not 'all' input, including mouse-movements, etc.. This data can be ignored by the web application, since the protected data contains the same information as well. Even better, if the 'usual' data is different, this is an indication that the user's client data processing device 120 is indeed infected by malware. However, still the validated collected input can safely be used, without a chance of fraudulent transactions.

### RE-USE

It is assumed that the user wishes to use the input data validating device 110 with another (new) web application. The owner of the other web application (e.g. a bank) sends an initial code (application code or admission code) on paper, by SMS or any other safe way other than through the possibly infected client data processing device 110. The user browses to an admission page and enters his credentials. The initial code must be preceded by a data sequence <CTRL>, <CTRL>, '3' (in this example) to switch the input data validating device 110 to its secret mode of operation. The user sees placeholders appear on a display 124 coupled to the client data processing device 120 from now on. The user types in the admission code and finishes with data sequence <CTRL>, <CTRL>, '2' or <CTRL>, <CTRL>, '1' to switch this secret mode of operation off, and to switch to a non-secured or a secured mode of operation, respectively.

During this process, the keystrokes that were kept secret were collected in the input data validating device 110 in a way that they can be used as an encryption key. Instead of digital signing using the private key of the input data validating device 110, all collected input is now encrypted using this encryption key. Even better, the public key of the input data validating device 110 is encrypted and added as well. Together with the also encrypted identification code of the input data validating device 110 it will be placed on the web page by the input data validating device 110 the same way as earlier described. The input data validating device 110 'types in' the result into the web page after sending the placement signal and before releasing the submit signal.

In this secret mode of operation, the input data validating device 110 may use symmetrical encryption like AES to encrypt the data.

The web application receives all submitted data. Since the admission code was sent by the (owner of the) web application in the first place, this admission code, being the same as the encryption key, is well known. It can be used to decrypt all received data. This data should contain the same admission code, so it is easy to verify if everything is all right. If the admission code is found, the encrypted data is received unchanged, no matter what happened with 'normal' data also received.

Of course, a user might enter input in some chaotic way. A number of variations on input, containing backspaces and re-typed input, might be necessary to evaluate. Nevertheless, for admission purposes, slightly more calculations by a web application should be acceptable.

The web application now has a proof that the user is indeed the one that originally received the admission code. The rest of the input is now known and correct. Also, the public key associated with the input data validating device 110 has been published to the web application this way. The web application can add the identification code of the input data validating device 110 and the public key to its administration. From now on, the user can safely communicate with this web application.

In the following, more detailed explanations of the invention are provided. It is assumed that a user operates the data input devices 101, 102, ... to input data into a web page of a server web application, wherein the web page is retrieved by the client data processing device 120 from the server 140 through the data communication network 130. In this process, some examples of operation of the input data validating device 110 are described, in a non-secured mode of operation, in a secured mode of operation, and in a secret mode of operation of the input data validating device 110.

### NON-SECURED MODE

The non-secured mode of operation of the input data validating device 110 is entered or started as a default mode of operation, when the input data validating device 110 is switched on, or after entering/inputting a predetermined configuration command code on a data input device 101, 102, ..., e.g. by typing the predetermined configuration command code on a keyboard. The non-secured mode of operation is exited or stopped by entering another mode of operation, i.e. a secured mode of operation or a secret mode of operation, or by switching off the input data validating device 110. Switching the input data validating device 110 on or off may be done by stopping a supply of power to at least a part of the input data validating device 110. Below, a data input device 101, 102, ... is an input device configured to generate alphanumeric characters, such as a keyboard.

In the example below, a '1', a '2' and <ENTER> are inputted through a data input device 101, 102, ... coupled to the input data validating device 110, and thereafter the input data validating device 110 is switched to a secured mode by inputting a predefined sequence <CTRL>, <CTRL> and '2' through the data input device 101, 102, ....
- 1.: A user inputs '1' on the data input device 101, 102, ....
- 1.1.: The input data validating device 110 receives input data in the form of a coded signal (hereinafter: code) representing '1' and converts this code in the processor 112 into an internal code (not described in detail) to improve storage efficiency.
- 1.2.: The input data validating device 110 checks whether the code represents (a part of) a predefined special code, and decides that this is not the case, since it is not <ENTER>, and it is not subsequent to a previous predefined special code, such as a code being part of a configuration command code.
- 1.3.: The input data validating device 110 adds the internal code to a first internal buffer 114, i.e. stores the internal code in the first internal buffer 114 in addition to any previously stored internal codes.
- 1.4.: The input data validating device 110 transmits the code to the client data processing device 120, e.g. for transmission to the server 140.
- 1.5.: The input data validating device 110 waits for new input data, and the client data processing device 120 processes the code, e.g. by displaying '1' on a display of the client data processing device 120.
- 2.: The user inputs '2' on the data input device 101, 102, ....
- 2.1.: The input data validating device 110 receives a code representing '2' and converts this code into an internal code.
- 2.2.: The input data validating device 110 checks whether the code represents (a part of) a predefined special code, and decides that this is not the case, since it is not <ENTER>, and it is not subsequent to a previous predefined special code, such as a code being part of a configuration command code..
- 2.3.: The input data validating device 110 adds the internal code to the first internal buffer 114.
- 2.4.: The input data validating device 110 transmits the code to the client data processing device 120, e.g. for transmission to the server 140.
- 2.5.: The input data validating device 110 waits for new input data, and the client data processing device 120 processes the code, e.g. by displaying '2' on the display of the client data processing device 120, e.g. by displaying the '2' next to the '1' already displayed.
- 3.: The user inputs <ENTER> on the data input device 101, 102, ....
- 3.1.: The input data validating device 110 receives a code representing <ENTER> and converts this code into an internal code.
- 3.2.: The input data validating device 110 checks whether the code represents (a part of) a predefined special code, and decides that this is the case.
- 3.3.: The input data validating device 110 detects that the code represents the predefined special code <ENTER>, which is a submit code.
- 3.4.: The input data validating device 110 empties the first internal buffer 114.
- 3.5.: The input data validating device 110 transmits the code to the client data processing device 120, e.g. for transmission to the server 140.
- 3.6.: The input data validating device 110 waits for new input data, and the client data processing device 120 processes the code, e.g. by submitting '12' or by starting a new line or paragraph, or moving to a new spreadsheet cell.
- 4.: The user inputs <CTRL> on the data input device 101, 102, ....
- 4.1.: The input data validating device 110 receives a code representing <CTRL> and converts this code into an internal code.
- 4.2.: The input data validating device 110 checks whether the code represents (a part of) a predefined special code, such as a code being part of a configuration command code, and decides that this is the case.
- 4.3.: The input data validating device 110 detects that the code represents the predefined special code <CTRL>.
- 4.4.: The input data validating device 110 adds the internal code to a first internal buffer 114, i.e. stores the internal code in the first internal buffer 114 in addition to any previously stored internal codes.
- 4.5.: The input data validating device 110 adds the internal code to a second internal buffer 116 (for special codes). At this time, the second internal buffer 116 does not contain a complete special code sequence.
- 4.6.: The input data validating device 110 does not transmit the code to the client data processing device 120.
- 4.7.: The input data validating device 110 waits for new input data.
- 5.: The user inputs <CTRL> on the data input device 101, 102, ....
- 5.1.: The input data validating device 110 receives a code representing <CTRL> and converts this code into an internal code.
- 5.2.: The input data validating device 110 checks whether the code represents (a part of) a predefined special code, such as a code being part of a configuration command code, and decides that this is the case.
- 5.3.: The input data validating device 110 detects that the code represents the predefined special code <CTRL>.
- 5.4.: The input data validating device 110 adds the internal code to the first internal buffer 114.
- 5.5.: The input data validating device 110 adds the internal code to the second internal buffer 116. At this time, the second internal buffer 116 does not contain a complete special code sequence.
- 5.6.: The input data validating device 110 does not transmit the code to the client data processing device 120.
- 5.7.: The input data validating device 110 waits for new input data.
- 6.: The user inputs '2' on the data input device 101, 102, ....
- 6.1.: The input data validating device 110 receives a code representing '2' and converts this code into an internal code.
- 6.2.: The input data validating device 110 checks whether the code represents (a part of) a predefined special code, such as a code being part of a configuration command code, and decides that this is the case, since the code was preceded by a special code (<CTRL>, <CTRL>).
- 6.3.: The input data validating device 110 adds the internal code to the first internal buffer 114.
- 6.4.: The input data validating device 110 adds the internal code to the second internal buffer 116. At this time, the second internal buffer 116 contains a complete special code sequence, in particular a code sequence for switching the operation of the input data validating device 110 to the secured mode.
- 6.5.: The input data validating device 110 does not transmit the code to the client data processing device 120.
- 6.6.: The input data validating device 110 switches to the secured mode of operation.
- 6.7.: The input data validating device 110 waits for new input data.

By inputting the input data <CTRL>, <CTRL>, '2' on the data input device 101, 102, ..., any previous input data already present in the first internal buffer 114 is retained therein.

In the non-secured mode, a user will not notice the existence and operation of the input data validating device 110. In the non-secured mode, storing all input data not representing a special code or special code sequence in the first internal buffer 114 is done since during inputting data in another mode (not being a non-secured mode, but a secured mode or a secret mode) can be selected by inputting input data representing a special code or special code sequence, and then all code stored in the first internal buffer 114 should be secured after switching the input data validating device 110 into the secured mode or the secret mode.

### SECURED MODE

The secured mode of operation of the input data validating device 110 is entered or started after entering/inputting a predetermined configuration command code on a data input device 101, 102, ..., e.g. by typing the predetermined configuration command code on a keyboard. The secured mode of operation is exited or stopped by entering another mode of operation, i.e. a non-secured mode of operation or a secret mode of operation, or by switching off the input data validating device 110. Switching the input data validating device 110 off may be done by stopping a processing device or processing function of the input validating device, and/or stopping a supply of power to at least a part of the input data validating device 110. Below, a data input device 101, 102, ... is an input device configured to generate alphanumeric characters, such as a keyboard.

In the example below, a '1', a '2' and <ENTER> are inputted through a data input device 101, 102, ... coupled to the input data validating device 110. It is assumed that the input data validating device 110 has been switched to, and operates in the secured mode, e.g. as described above under the heading non-secured mode, items 4, 5 and 6.
- 7.: A user inputs '1' on the data input device 101, 102, ....
- 7.1.: The input data validating device 110 receives input data in the form of a coded signal (hereinafter: code) representing '1' and converts this code into an internal code (not described in detail) to improve storage efficiency.
- 7.2.: The input data validating device 110 checks whether the code represents (a part of) a predefined special code, and decides that this is not the case, since it is not <ENTER>, and it is not subsequent to a previous predefined special code, such as a code being part of a configuration command code.
- 7.3.: The input data validating device 110 adds the internal code to the first internal buffer 114.
- 7.4.: The input data validating device 110 transmits the code to the client data processing device 120, e.g. for transmission to the server 140.
- 7.5.: The input data validating device 110 waits for new input data, and the client data processing device 120 processes the code, e.g. by displaying '1' on a display of the client data processing device 120.
- 8.: The user inputs '2' on the data input device 101, 102, ....
- 8.1.: The input data validating device 110 receives a code representing '2' and converts this code into an internal code.
- 8.2.: The input data validating device 110 checks whether the code represents (a part of) a predefined special code, and decides that this is not the case, since it is not <ENTER>, and it is not subsequent to a previous predefined special code, such as a code being part of a configuration command code.
- 8.3.: The input data validating device 110 adds the internal code to the first internal buffer 114.
- 8.4.: The input data validating device 110 transmits the code to the client data processing device 120, e.g. for transmission to the server 140.
- 8.5.: The input data validating device 110 waits for new input data, and the client data processing device 120 processes the code, e.g. by displaying '2' on the display of the client data processing device 120, e.g. by displaying the '2' next to the '1' already displayed.
- 9.: The user inputs <ENTER> on the data input device 101, 102, ....
- 9.1.: The input data validating device 110 receives a code representing <ENTER> and converts this code into an internal code.
- 9.2.: The input data validating device 110 checks whether the code represents (a part of) a predefined special code, and decides that this is the case.
- 9.3.: The input data validating device 110 detects that the code represents the predefined special code <ENTER>, which is a submit code.
- 9.4.: The input data validating device 110 generates a hash value of a combination of an input data validating device 110 identification code, a timestamp and the contents of the first internal buffer 114.
- 9.5.: The input data validating device 110 encrypts the hash value with the private key. The result of the encryption is a digital signature.
- 9.6.: The input data validating device 110 transmits a placement signal (which is predefined, e.g. a code representing a plurality of times <CTRL>-key-up) to the client data processing device 120, as an indication.
- 9.7.: The client data processing device 120 may convert this placement signal into a command. For example, a client side script of a web page may position an input cursor at a predetermined input field of a web page.
- 9.8.: The input data validating device 110 transmits the identification code, the content of the first internal buffer 114, and the digital signature to the client data processing device 120, similar to the situation of transmitting original input data.
- 9.9.: The input data validating device 110 transmits the code (<ENTER>) to the client data processing device 120.
- 9.10.: The input data validating device 110 empties the first internal buffer 114.
- 9.11.: The input data validating device 110 waits for new input data, and the client data processing device 120 processes the code, first by receiving the identification code, the content of the first internal buffer 114 and the digital signature, and then e.g. by submitting '12' or by starting a new line or paragraph, or moving to a new spreadsheet cell.

In the secured mode, a user will not notice the existence and operation of the input data validating device 110, when the web page is prepared to receive the extra data in an invisible or hidden field or in a similar way.
- 9.12.: The server 140 receives the submitted data. Such data are the 'normal' data (which also would be transmitted if the input data validating device 110 would be absent, and the data input device 101, 102, ... would be coupled directly to the client data processing device 120), supplemented by a data element containing the extra information consisting of the identification code, the content of the first internal buffer 114 and the digital signature.
- 9.13.: The extra information may or may not be used by the server 140 to verify the input data, and to even in case of input data manipulated by malware use the correct input data instead of the manipulated input data. The input data as delivered by the first internal buffer 114 may differ from the 'normal' input data, since the input data as delivered by the first internal buffer 114 may also contain input data generated by mouse movements, backspaces, tabs, etc. It is in particular this feature that enables an analysis of the actual behavior of the client. Furthermore, the inclusion of the identification code provides the server 140 with proof of the identity of the input data validating device 110 transmitting the input data.

### SECRET MODE

The secret mode of operation of the input data validating device 110 is entered or started after entering/inputting a predetermined configuration command code on a data input device 101, 102, ..., e.g. by typing the predetermined configuration command code on a keyboard. The secret mode of operation is exited or stopped by entering another mode of operation, i.e. a secured mode of operation or a non-secured mode of operation, or by switching off the input data validating device 110. Switching the input data validating device 110 off is done by stopping a processing device or processing function of the input validating device, and/or stopping a supply of power to at least a part of the input data validating device 110. Below, a data input device 101, 102, ... is an input device configured to generate alphanumeric characters, such as a keyboard.

In the example below, a '1', a '2' and <ENTER> are inputted through a data input device 101, 102, ... coupled to the input data validating device 110. It is assumed that the input data validating device 110 has been switched to, and operates in the secret mode, e.g. similar as described above under the heading non-secured mode, items 4, 5 and 6, but using another special code to initiate the secret mode.
- 10.: A user inputs '1' on the data input device 101, 102, ....
- 10.1.: The input data validating device 110 receives input data in the form of a coded signal (hereinafter: code) representing '1' and converts this code into an internal code (not described in detail) to improve storage efficiency.
- 10.2.: The input data validating device 110 checks whether the code represents (a part of) a predefined special code, and decides that this is not the case, since it is not <ENTER>, and it is not subsequent to a previous predefined special code, such as a code being part of a configuration command code.
- 10.3.: The input data validating device 110 adds the internal code to the first internal buffer 114.
- 10.4.: The input data validating device 110 adds the internal code to a key data buffer.
- 10.5.: The input data validating device 110 does not transmit the code to the client data processing device 120, but instead transmits a predefined first placeholder to the client data processing device 120.
- 10.6.: The input data validating device 110 waits for new input data, and the client data processing device 120 processes the code, e.g. by displaying the first placeholder on a display of the client data processing device 120.
- 11.: The user inputs '2' on the data input device 101, 102, ....
- 11.1.: The input data validating device 110 receives a code representing '2' and converts this code into an internal code.
- 11.2.: The input data validating device 110 checks whether the code represents (a part of) a predefined special code, and decides that this is not the case, since it is not <ENTER>, and it is not subsequent to a previous predefined special code, such as a code being part of a configuration command code.
- 11.3.: The input data validating device 110 adds the internal code to the first internal buffer 114.
- 11.4.: The input data validating device 110 adds the internal code to the key data buffer.
- 11.5.: The input data validating device 110 does not transmit the code to the client data processing device 120, but instead transmits a predefined second placeholder to the client data processing device 120. The second placeholder may or may not be the same as a previously used placeholder.
- 11.6.: The input data validating device 110 waits for new input data, and the client data processing device 120 processes the code, e.g. by displaying the second placeholder on the display of the client data processing device 120, e.g. by displaying the second placeholder next to the previous placeholder, already displayed.
- 12.: The user inputs <ENTER> on the data input device 101, 102, ....
- 12.1.: The input data validating device 110 receives a code representing <ENTER> and converts this code into an internal code.
- 12.2.: The input data validating device 110 checks whether the code represents (a part of) a predefined special code, and decides that this is the case.
- 12.3.: The input data validating device 110 detects that the code represents the predefined special code <ENTER>, which is a submit code.
- 12.4.: The input data validating device 110 encrypts a combination of at least an input data validating device 110 identification code, the contents of the first internal buffer 114, and the public key previously stored in a memory of the input data validating device 110, using the contents of the key data buffer as an encryption key.
- 12.5.: The input data validating device 110 transmits a placement signal (which is predefined, e.g. a code representing a plurality of times <CTRL>-key-up) to the client data processing device 120, as an indication.
- 12.6.: The client data processing device 120 may convert this placement signal into a command. For example, a client side script of a web page may position an input cursor at a predetermined input field of a web page.
- 12.7.: The input data validating device 110 transmits the identification code, and the result of the encryption to the client data processing device 120, similar to the situation of transmitting original input data.
- 12.8.: The input data validating device 110 transmits the code (<ENTER>) to the client data processing device 120.
- 12.9.: The input data validating device 110 empties the first internal buffer 114.
- 12.10.: The input data validating device 110 waits for new input data, and the client data processing device 120 processes the code, first by receiving the identification code and the encrypted data, and then, as a result of the <ENTER>, e.g. by submitting a web page.

In this secret mode, only placeholders appear on a display of the client data processing device 120. Any malware in the client data processing device 120 will only detect placeholders. The real input data are kept secret. Note that certain keystrokes may be transmitted to the client data processing device 120 unchanged, as is the case of the code representing the <Backspace> key. Also, mouse movements are transmitted unchanged and so is the case with data input of several other types of data input devices 101, 102, .... Certain other keystrokes can best be blocked, as is the case with copy- and paste-sequences of keystrokes, although its presence (or copy/paste activities by using the mouse) can be detected by the server anyway.

12.11. The server 140 receives the submitted data. If the key inputted in the secret mode is known by the server 140 (e.g. a login code which has been sent to the client), then the submitted data can be decrypted by the server application and the original input data become available again, even if some 'normal' data elements only contain placeholders.

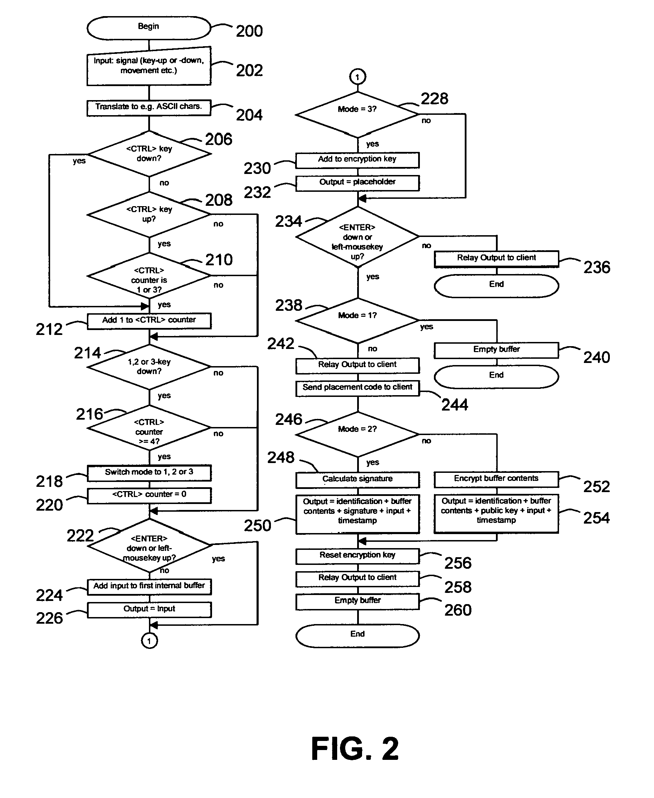

Figure 2 depicts a flow diagram of an embodiment of some internal data processing performed in processor 112 and other circuitry in the input data validating device 110 using software comprising computer instructions executed in the processor 112. Note that all predefined and/or special keys and keystrokes in this flow diagram are only exemplary. A concrete design and implementation of the input data validating device 110 may use other predefined and/or special keys and keystrokes. Also note that Figure 2 contains a storage-item called' Output'. This item holds data that is, at any point of time, just a storage-item. No actual output is produced by the input data validating device 110 until a process step is encountered stating 'Relay Output to Client' (client being the client data processing device).

In step 200, the input data validating device 110 is ready to receive input from one or more of the data input devices 101, 102, .... As soon as input is detected, the data processing continues at step 202.

In step 202, the input data validating device 110 receives input from one or more of the data input devices 101, 102, .... Such input, representing input data, may be in the form of electrical signals which uniquely define predetermined manipulation of the data input device(s) 101, 102, ..., such as a key down movement, a key up movement, a mouse movement, etc..

In step 204, the input is translated or converted to e.g. ASCII codes or any other code suitable to be processed by a computer device.

In step 206, it is checked by the software of the input data validating device 110 whether or not the input received at step 202 represents pressing down or otherwise manipulating a <CTRL> key, assuming that at least one data input device has (in case of a touchscreen, a representation of) such a key. Since in case of a mechanical type of keyboard, such <CTRL> key would be pressed down, the software checks whether a signal has been generated representing a <CTRL> key down action. If this is not the case, then the data processing continues at step 208.

In step 208, it is checked by the software of the input data validating device 110 whether or not the input received at step 202 represents a <CTRL> key up action (at a mechanical type of keyboard, releasing the <CTRL> key). If this is the case, then the data processing continues at step 210.

In step 210, a <CTRL> counter is read, where the counter is a number stored in a memory device of the input data validating device 110. In step 210, it is checked by the software of the input data validating device 110 whether or not the value of the <CTRL> counter is 1 or 3. If this is the case, then the data processing continues at step 212.

In step 212, the <CTRL> counter is incremented by 1. If, in step 206, the software in the input data validating device 110 determines that the input received at step 202 represents a <CTRL> key down action, the data processing continues from step 206 to step 212. If, in step 208, the software in the input data validating device 110 determines that the input received at step 202 does not represent a <CTRL> key up action or, in step 210, the software in the input data validating device 110 determines that the value of the <CTRL> counter is not equal to 1 or 3, then the data processing continues from steps 208 or 210, respectively, to step 214.

In step 214, it is checked by the software in the input data validating device whether or not the input received at step 202 represents pressing a '1' key down, a '2' key down or a '3' key down. If this is the case, then the data processing continues at step 216.

In step 216, it is checked by the software in the input data validating device 110 whether or not the value of the <CTRL> counter is greater than, or equal to 4. If this is the case, then the data processing continues at step 218.

In step 218, the mode of operation of the input data validating device 110 is switched to 1 (secured mode of operation), to 2 (non-secured mode of operation) or to 3 (secret mode of operation), depending whether in step 214 a pressing down of a '1' key, a '2' key or a '3' key, respectively, was detected. The data processing continues at step 220.

In step 220, the <CTRL> counter is reset to zero. The data processing continues at step 222.

If, in step 214, the software in the input data validating device 110 determines that the input received at step 202 does not represent a pressing down of a '1' key, a '2' key or a '3' key or, in step 216, the software in the input data validating device 110 determines that the value of the <CTRL> counter is not greater than, or equal to 4, then the data processing continues from steps 214 or 216, respectively, to step 222.

In step 222, it is checked by the software in the input data validating device whether or not the input received at step 202 represents providing a submit action, such as pressing an <ENTER> key down or a left mouse key up action. If this is not the case, then the data processing continues at step 224.

In step 224, the input data is added to the first internal buffer 114. Then the data processing continues at step 226.

In step 226, the input data received at step 202 is output by the input data validating device 110 to the client data processing device 120. Then the data processing continues at step 228.

If, in step 222, the software in the input data validating device 110 determines that the input received at step 202 does represent providing a submit action, such as pressing an <ENTER> key down or a left mouse key up action, then the data processing continues from step 222 to step 228.

In step 228, it is checked by the software in the input data validating device 110 whether or not the status of the input data validating device 110 equals 3 (secret mode of operation). If this is the case, then the data processing continues at step 230.

In step 230, the input received at step 202 is added to an encryption key to build the encryption key. Then the data processing continues at step 232.

In step 232, input data validating device 110 defines output to be a placeholder (such as a bullet or asterisk). Then the data processing continues at step 234.

If, in step 228, the software in the input data validating device 110 determines that the status of the input data validating device 110 is not equal to 3 (i.e. that the input data validating device 110 is not in a secret mode of operation, but in a secured mode of operation (status 1) or in a non-secured mode of operation (status 2)), then the data processing continues from step 228 to step 234.

In step 234, it is checked by the software in the input data validating device 110 whether or not the input received at step 202 represents providing a submit action, such as pressing an <ENTER> key down or a left mouse key up action. If this is the case, then the data processing continues at step 238. If this is not the case, then the data processing continues at step 236.

In step 236, the input data validating device 110 provides the output to the client data processing device 120. Then the data processing continues at step 200.

In step 238, it is checked by the software in the input data validating device 110 whether or not the status of the input data validating device 110 equals 1 (secured mode of operation). If this is not the case, then the data processing continues at step 242. If this is the case, then the data processing continues at step 240.

In step 240, the first internal buffer 114 is emptied. Then the data processing continues at step 200.

In step 242, the input data received at step 202 is output by the input data validating device 110 to the client data processing device 120. Then the data processing continues at step 244.

In step 244, input data validating device 110 outputs a placement signal to the client data processing device 120. Then the data processing continues at step 246.

In step 246, it is checked by the software in the input data validating device 110 whether or not the status of the input data validating device 110 equals 2 (non-secured mode of operation). If this is the case, then the data processing continues at step 248.

In step 248, the software in the input data validating device 110 generates a digital signature of the contents of the first internal buffer 114 using a private key associated with the input data validating device 110. Then the processing continues at step 250.

In step 250, the software in the input data validating device 110 defines output including an identification code (identifying the specific input data validating device 110), the contents of the first internal buffer 114, the digital signature generated at step 248, the input, and a timestamp. Then the processing continues at step 256. The step 250 is exemplified in the above steps 9.8 and 9.9.

If, in step 246, the software in the input data validating device 110 determines that the status of the input data validating device 110 does not equal 2 (i.e. that the input data validating device 110 is not in a non-secured mode of operation, but in a secured mode of operation (status 1) or in a secret mode of operation (status 3)), then the data processing continues from step 246 to step 252.

In step 252, the contents of the first internal buffer 114 is encrypted with the encryption key. The step 252 is exemplified in step 12.4 above. Then the processing continues at step 254.

In step 254, the software in the input data validating device 110 defines output including an identification code (identifying the specific input data validating device 110), the encrypted contents of the first internal buffer 114, a public key, the input, and a timestamp. The step 254 is exemplified in the above steps 12.7 and 12.8. Then the processing continues at step 256.

In step 256, the software in the input data validating device 110 resets the encryption key. Then the processing continues at step 258.

In step 258, the input data validating device 110 provides the output to the client data processing device 120. Then the processing continues at step 260.

In step 260, the software of the input data validating device 110 empties the first internal buffer 114. Then the processing continues at step 200.

In the system and method of the invention, examples of predefined input data (special codes) or output data for switching modes of operation, placement codes or placeholders, have been given above. Other appropriate signals and/or codes can be designed and implemented. Some special codes can never be produced by a client data input device 101, 102, ..., such as subsequent <CTRL>-key-up codes. Such codes do not affect the input data, but can be used by a client-side scripting language e.g. to move a cursor to a selected position in a web page.

It is further noted that encryption processes used in the system and method of the invention (such as asymmetrical encryption with private key and public key in the secured mode, and symmetrical encryption in the secret mode), creating hash values and converting any data to 'readable' data which can be transmitted to the client data processing device 110 as pseudo input data, and an exact format of signals and coding of peripheral equipment such as the client data input devices 101, 102, ..., USB or other protocols, etc. are not described in detail, since such technology is generally available and used.

As an illustration of use and usefulness of the invention, the following two examples are given.

### EXAMPLE 1

In one type of fraud that is quite common, real, ongoing and modern 'social engineering'-based, malware steals all sorts of information while a customer uses e-banking. After a number of days, the customer is called on the phone by a person who claims to be a bank-employee, telling the customer that something is wrong with his credentials, possibly his security-token. The criminal calling person then asks the customer to test this token. If the customer has doubts about the identity of the calling person, this person can easily give all sorts of information that only the bank could know (but in fact has been gathered by the malware). Besides, the customer believes, or is made to believe, that testing the token without even using the computer, maybe with a switched-off computer, cannot have adverse consequences. During the conversation, the calling person uses the challenges from the bank to tell the customer, and types in all responses the customer provides. In this way, the money in the account of the customer is easily transferred to another account and within minutes it is cashed at an ATM somewhere else in the world.

The invention can easily prevent this kind of fraud. Because the criminal calling person only needed information and manipulated the customer to use his token (two-factor authentication device) to provide this information, the criminal calling person was successful. Once typed in, the 'responses' could not be validated anymore as coming from the right customer. If, however, the web application of the bank would expect the information coming from the customer through his input data validating device 110 operating in secured mode of operation, typing in the response by the criminal from another data processing device would fail, because of the absence of the extra data provided by the input data validating device 110, or the fact that verification based on the expected public key will fail.

### EXAMPLE 2

In another example of fraud that exists in real life, again imagine a customer using an e-banking web application. After business well done, the customer closes his web browser. After a while (after an hour, a day, even weeks or more) the customer decides to have a look, opens a browser and starts e-banking. As a first step in a usual e-banking procedure, authentication is performed using a security token. At this moment, harm is already done. Malware was able to trap the closing of the previous e-banking session. The malware kept the session 'alive' until the customer started e-banking for the second time. Even if the customer had switched off his computer, the session could have been kept alive on another computer.

Normally, without detecting any activities, the e-banking web application would have timed out the session after a while. This was not the case here. So, without knowing, in starting an e-banking session the second time, the customer did not authenticate, but in fact signed a fraudulent transaction that was already prepared by the malware.

The use of an input data validating device 110 would have prevented the above fraud in the following way. To keep the e-banking session alive, the malware had to generate 'submits' on a regular basis. If a timeout setting of the e-banking web application is, say, 10 minutes, then the malware sends a 'submit' code such as <ENTER> or <Mouse-up> every 9 minutes. In this way the web application assumes the customer is still active. These 'submit' codes are, however, not signed by the input data validating device 110 of the customer as would be expected by the e-banking web application. They never can be. Even repeating previously generated input data from the input data validating device 110 by the malware will fail, when this information includes timestamp information. Subsequent digital signatures will therefore differ from each other. Absence of a valid signature will make the web application notice something is wrong. The web application session will be closed, maybe the account will be blocked and the customer may be notified. It will be clear that through use of the input data validating device of the invention, the described way of fraud is virtually impossible.

Since keeping alive is usually done by the web application first sending a 'warning' to the customer, telling him to do something, or press a button to keep the session alive, use of a mouse or a keyboard is likely to happen.

The present invention assures data integrity through the use of integral collection of all input from all data input devices 101, 102, ..., digitally signing this data at submit, and adding it to the user's input before releasing the submit itself. Data protection is obtained by only responding to commands from the safe side, the data input devices 101, 102, ..., and not to commands from the client data processing device 120. Secret information is hidden from malware by sending placeholders instead. Furthermore, status is informed to the client data processing device 120 (to be optionally used by client-side scripts) by sending signal sequences which normally would be impossible to generate. Examples have been given of how some types of real fraud will be prevented. Even certain kinds of social engineering will be prevented by the use of the data input validating device 110, or at least made more difficult.

Some highlights of the invention are:
- All data from client data input devices is protected before it reaches the configurable (part of the) client data processing device.
- The input from all client data input devices is collected in the input data validating device in an integral way, not separated. E.g. both keystrokes and mouse activities are collected and secured in an integral way.
- Data is first collected and only if a (predefined) submit situation exists, it is signed and added to a web page. Then, a submit signal is released to the web page.
- The input data validating device itself is non-configurable through the client data processing device (besides switching on and off its power supply).
- Switching from one mode of operation to another mode of operation of the input data validating device is only possible through predefined input at the data input devices (e.g. a fixed set of keystrokes on a keyboard).
- Confidential input is converted into placeholders in a secret mode of operation of the input data validating device before it is relayed to the client data processing device.
- Confidential input is still collected as entered into the input data validating device. Once a submit action is detected, this input itself is used as an encryption key to encrypt both itself, and all other collected data. The result is entered into the web page (which is then submitted since the submit signal is finally released).
- Submitted (protected and confidential) data will also contain information about the input data validating device itself, like an identification code and - encrypted - the public key of the input data validating device.
- The input data validating device may signal its status to the client data processing device by sending a pre-defined set of virtual data input device signals. Here 'virtual' means that this set of signals can never be produced by those data input devices themselves. An example is a sequence of three or more 'key up' signals for the same key, like the <CTRL> key. The keyboard can not produce such a sequence since it will generate a key down signal before every subsequent key up signal.
- A similar way is used to signal the client data processing device to move the input cursor into a predetermined field on the web page, to have the web page receive the data generated by the input data validating device.
- Since the input data validating device communicates with the client data processing device as if 'ordinary' input was entered, the client data processing device needs no modification. To use the input data validating device conveniently, the web page should only include an extra input field and optionally some client side scripting to respond to signals from the input data validating device.

As explained above, in a system for secure data transmission from a client to a server, a client comprises at least one client data input device, a client data processing device and an input data validating device coupled between at least one client data input device and the client data processing device. The input data validating device is associated with an identification code and stores a private key associated with a public key. The input data validating device can operate in at least two of a non-secured mode of operation, a secured mode of operation, and a secret mode of operation. The input data validating device receives input data generated by each client data input device, and collects the input data, in time order of receipt, in a data buffer. Depending on the mode of operation, the buffered input data is secured, and transmitted to the server by the client data processing device. The server executes a server application and stores store the public key and the associated identification code of the input data validating device.

As required, detailed embodiments of the present invention are disclosed herein. However, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. Further, the terms and phrases used herein are not intended to be limiting, but rather, to provide an understandable description of the invention.

The terms "a" or "an", as used herein, are defined as one or more than one. The term plurality, as used herein, is defined as two or more than two. The term timestamp, as used herein, is defined as a data item changing in time, not necessarily representing the actual time of day. The term another, as used herein, is defined as at least a second or more. The terms including and/or having, as used herein, are defined as comprising (i.e., open language, not excluding other elements or steps). Any reference signs in the claims should not be considered as limiting the scope of the claims or the invention.

The mere fact that certain measures are recited in mutually different dependent claims does not indicate that a combination of these measures cannot be used to advantage.

The term coupled, as used herein, is defined as connected, although not necessarily directly, and not necessarily mechanically.

The term placeholder, as used herein, is defined as a character without a special meaning, except for showing the user the existence of any character at the associated specific place of an input field.

A single processor or other unit may fulfil the functions of several items recited in the claims.

The terms program, software application, and the like as used herein, are defined as a sequence of instructions designed for execution on a computer or processing system. A program, computer program, or software application may include a subroutine, a function, a procedure, an object method, an object implementation, an executable application, an applet, a servlet, a source code, an object code, a shared library/dynamic load library and/or other sequence of instructions designed for execution on a computer or processing system.

A computer program may be stored and/or distributed on a suitable medium, such as an optical storage medium or a solid-state medium supplied together with or as part of other hardware, but also be distributed in other forms, such as via the Internet or other wired or wireless telecommunication systems.

## Claims

1. A system for secure data transmission from a client to a server, the system comprising:
a client comprising at least one client data input device, a client data processing device and an input data validating device coupled between the at least one client data input device and the client data processing device,
wherein the input data validating device is associated with an identification code and a private key associated with a public key, and the input data validating device is configured for operating in at least two of a non-secured mode of operation, a secured mode of operation, and a secret mode of operation,
wherein, in the non-secured mode of operation, the input data validating device is configured for:
(a1) receiving input data generated by each client data input device;
(b1) collecting the input data, in time order of receipt, in a data buffer, wherein the data buffer stores buffered input data; and
(c1) releasing the input data to the client data processing device for transmission to the server,
wherein, in the secured mode of operation, the input data validating device is configured for:
(a2) receiving input data generated by each client data input device;
(b2) collecting the input data, in time order of receipt, in a data buffer, wherein the data buffer stores buffered input data;
(c2) releasing the input data to the client data processing device for transmission to the server,
(d2) using the private key and a timestamp to generate a digital signature of the buffered input data; and
(e2) releasing the input data, the buffered input data, the digital signature, and the identification code to the client data processing device for transmission to the server,
wherein, in the secret mode of operation, the input data validating device is configured for:
(a3) receiving input data generated by each client data input device;
(b3) collecting the input data, in time order of receipt, in a data buffer, wherein the data buffer stores buffered input data;
(c3) releasing placeholders to the client data processing device;
(d3) generating an encryption key based on the buffered input data;
(e3) generating encrypted data by encrypting the buffered input data, the public key and the identification code, using the encryption key; and
(f3) releasing the encrypted results to the client data processing device for transmission to the server,
a server configured to execute a server application, wherein the server is configured to store the public key and the associated identification code of the input data validating device,
wherein, in the non-secured mode of operation of the input data validating device, the server application is configured for:
(d1) receiving input data from the client data processing device, the input data being generated by each client data input device; and
(e1) processing the input data,
wherein, in the secured mode of operation of the input data validating device, the server application is configured for:
(f2) receiving the buffered input data, the digital signature, and the identification code from the client data processing device;
(g2) validating the buffered input data based on the public key associated with the identification code; and
(h2) if the validation is positive, processing the buffered input data,
wherein, in the secret mode of operation of the input data validating device, the server application is configured for:
(g3) receiving the encrypted buffered input data from the client data processing device;
(h3) decrypting the encrypted buffered input data based on the encryption key;
(i3) validating the decrypted buffered input data based on the encryption key; and
(j3) if the validation is positive, processing the buffered input data.

2. A client for secure data transmission from the client to a server, the client comprising at least one client data input device, a client data processing device and an input data validating device coupled between the at least one client data input device and the client data processing device,
wherein the input data validating device is associated with an identification code and a private key associated with a public key, and the input data validating device is configured for operating in at least two of a non-secured mode of operation, a secured mode of operation, and a secret mode of operation,
wherein, in the non-secured mode of operation, the input data validating device is configured for:
(a1) receiving input data generated by each client data input device;
(b1) collecting the input data, in time order of receipt, in a data buffer,
wherein the data buffer stores buffered input data; and
(c1) releasing the input data to the client data processing device for transmission to the server,
wherein, in the secured mode of operation, the input data validating device is configured for:
(a2) receiving input data generated by each client data input device;
(b2) collecting the input data, in time order of receipt, in a data buffer, wherein the data buffer stores buffered input data;
(c2) releasing the input data to the client data processing device for transmission to the server,
(d2) using the private key and a timestamp to generate a digital signature of the buffered input data; and
(e2) releasing the input data, the buffered input data, the digital signature, and the identification code to the client data processing device for transmission to the server,
wherein, in the secret mode of operation, the input data validating device is configured for:
(a3) receiving input data generated by each client data input device;
(b3) collecting the input data, in time order of receipt, in a data buffer, wherein the data buffer stores buffered input data;
(c3) releasing placeholders to the client data processing device;
(d3) generating an encryption key based on the buffered input data;
(e3) generating encrypted data by encrypting the buffered input data, the public key and the identification code, using the encryption key; and
(f3) releasing the encrypted results to the client data processing device for transmission to the server.

3. A server for secure data transmission from a client to the server, the server being configured to execute a server application, wherein the server is configured to store a public key and an associated identification code of an input data validating device, wherein the input data validating device:
- is coupled between at least one client data input device and a client data processing device of the client;
- is associated with an identification code and a private key associated with the public key for generating a digital signature; and
- is configured for operating in at least two of a non-secured mode of operation, a secured mode of operation, and a secret mode of operation,
wherein, in the non-secured mode of operation of the input data validating device, the server application is configured for:
(d1) receiving input data from the client data processing device, the input data being generated by each client data input device; and
(e1) processing the input data,
wherein, in the secured mode of operation of the input data validating device, the server application is configured for:
(f2) receiving buffered input data, the digital signature, and the identification code from the client data processing device;
(g2) validating the buffered input data based on the public key associated with the identification code; and
(h2) if the validation is positive, processing the buffered input data,
wherein, in the secret mode of operation of the input data validating device, the server application is configured for:
(g3) receiving encrypted buffered input data from the client data processing device;
(h3) decrypting the encrypted buffered input data based on an encryption key;
(i3) validating the decrypted buffered input data based on the encryption key; and
Q3) if the validation is positive, processing the buffered input data.

4. An input data validating device configured to be coupled between at least one client data input device and a client data processing device,
wherein the input data validating device is associated with an identification code and a private key associated with a public key, and the input data validating device is configured for operating in at least two of a non-secured mode of operation, a secured mode of operation, and a secret mode of operation,
wherein, in the non-secured mode of operation, the input data validating device is configured for:
(a1) receiving input data generated by each client data input device;
(b1) collecting the input data, in time order of receipt, in a data buffer, wherein the data buffer stores buffered input data; and
(c1) releasing the input data to the client data processing device for transmission to a server,
wherein, in the secured mode of operation, the input data validating device is configured for:
(a2) receiving input data generated by each client data input device;
(b2) collecting the input data, in time order of receipt, in a data buffer, wherein the data buffer stores buffered input data;
(c2) releasing the input data to the client data processing device for transmission to a server;
(d2) using the private key and a timestamp to generate a digital signature of the buffered input data; and
(e2) releasing the buffered input data, the digital signature, and the identification code to the client data processing device for transmission to a server,
wherein, in the secret mode of operation, the input data validating device is configured for:
(a3) receiving input data generated by each client data input device;
(b3) collecting the input data, in time order of receipt, in a data buffer, wherein the data buffer stores buffered input data;
(c3) releasing placeholders to the client data processing device;
(d3) generating an encryption key based on the buffered input data;
(e3) generating encrypted data by encrypting the buffered input data, the public key and the identification code, using the encryption key; and
(f3) releasing the encrypted results to the client data processing device for transmission to a server.

5. The system of claim 1, the client of claim 2, or the data input validating device of claim 4, wherein the step of collecting the input data in a data buffer comprises:
- converting input data received from each client data input device into an internal code; and
- buffering the internal code in the data buffer.

6. The system of any of claims 1 and 5, the client of any of claims 2 and 5, or the data input validating device of any of claims 4 and 5, wherein the input data validating device further is configured for:
- detecting predetermined input data representing a configuration command for the input data validating device, and associated with one of the non-secured mode of operation, the secured mode of operation, and the secret mode of operation;
- in response to detecting the predetermined input data representing a configuration command for the input data validating device, setting the corresponding mode of operation of the input data validating device.

7. The system of claim 6, the client of claim 6, or the data input validating device of claim 6, wherein the input data validating device further is configured for releasing predetermined signaling data to the client data processing device for signaling the predetermined input data representing a configuration command for the input data validating device to the client data processing device.

8. The system of any of claims 1, 5, 6 and 7, the client of any of claims 2, 5, 6 and 7, or the data input validating device of any of claims 4, 5, 6 and 7, wherein the input data validating device, configured for operating in the secured mode of operation or the secret mode of operation, further is configured for:
- in the secured mode of operation, at step (b2), detecting predetermined input data representing a data submit situation; and
- in the secret mode of operation, at step (b3), detecting predetermined input data representing a data submit situation.

9. The system of claim 8, the client of claim 8, or the data input validating device of claim 8, wherein the input data validating device, configured for operating in the secured mode of operation or the secret mode of operation, further is configured for:
- in the secured mode of operation, in response to detecting the predetermined input data representing a data submit situation, before step (e2), transmitting a placement code to the client data processing device for transmission to the server; and
- in the secret mode of operation, in response to detecting the predetermined input data representing a data submit situation, before step (f3), transmitting a placement code to the client data processing device for transmission to the server.

10. The system of any of claims 1, 5, 6, 7, 8 and 9, the client of any of claims 2, 5, 6, 7, 8 and 9, or the data input validating device of any of claims 4, 5, 6, 7, 8, and 9, wherein the client data input device comprises a keyboard, a mouse device, a pointing device, a touchscreen device, an image recording device, a video recording device, a sound recording device or any other type of 'Human Interface Device'.

11. A method for secure data transmission from a client to a server, the method comprising:
providing an input data validating device coupled between at least one client data input device and a client data processing device, the input data validating device being associated with an identification code and a private key associated with a public key, the input data validating device being configured for operating in at least two of a non-secured mode of operation, a secured mode of operation, and a secret mode of operation,
- in the non-secured mode of operation, the input data validating device:
(a1) receiving input data generated by each client data input device;
(b1) collecting the input data, in time order of receipt, in a data buffer, wherein the data buffer stores buffered input data; and
(c1) releasing the buffered input data to the client data processing device for transmission to the server,
- in the secured mode of operation, the input data validating device:
(a2) receiving input data generated by each client data input device;
(b2) collecting the input data, in time order of receipt, in a data buffer, wherein the data buffer stores buffered input data;
(c2) releasing the buffered input data to the client data processing device for transmission to the server;
(d2) using the private key and a timestamp to generate a digital signature of the buffered input data; and
(e2) releasing the buffered input data, the digital signature, and the identification code to the client data processing device for transmission to the server,
- in the secret mode of operation, the input data validating device:
(a3) receiving input data generated by each client data input device;
(b3) collecting the input data, in time order of receipt, in a data buffer, wherein the data buffer stores buffered input data;
(c3) releasing placeholders to the client data processing device;
(d3) generating an encryption key based on the buffered input data;
(e3) generating encrypted data by encrypting the buffered input data, the public key and the identification code, using the encryption key; and
(f3) releasing the encrypted results to the client data processing device for transmission to the server,
providing a server executing a server application, the server storing the public key and the associated identification code of the input data validating device,
- in the non-secured mode of operation of the input data validating device, the server application:
(d1) receiving input data from the client data processing device, the input data being generated by each client data input device; and
(e1) processing the input data,
- in the secured mode of operation of the input data validating device, the server application:
(f2) receiving the buffered input data, the digital signature, and the identification code from the client data processing device;
(g2) validating the buffered input data based on the public key associated with the identification code; and
(h2) if the validation is positive, processing the buffered input data,
- in the secret mode of operation of the input data validating device, the server application:
(g3) receiving the encrypted buffered input data from the client data processing device;
(h3) decrypting the encrypted buffered input data based on the encryption key;
(i3) validating the decrypted buffered input data based on the encryption key; and
(j3) if the validation is positive, processing the buffered input data.

12. A server application for secure data transmission from a client to the server, the server application comprising computer instructions enabling a processing device of a server, when the computer instructions are loaded in the processing device, to carry out the steps of:
receiving input data from a client data processing device, the input data being generated by at least one client data input device coupled to a client data processing device through an input data validating device associated with an identification code and a private key associated with the public key for generating a digital signature private key,
- in a non-secured mode of operation of the input data validating device:
(d1) receiving input data from the client data processing device, the input data being generated by each client data input device; and
(e1) processing the input data,
- in a secured mode of operation of the input data validating device:
(f2) receiving buffered input data, the digital signature, and the identification code from the client data processing device;
(g2) validating the buffered input data based on the public key associated with the identification code; and
(h2) if the validation is positive, processing the buffered input data,
- in a secret mode of operation of the input data validating device:
(g3) receiving encrypted buffered input data from the client data processing device;
(h3) decrypting the encrypted buffered input data based on an encryption key;
(i3) validating the decrypted buffered input data based on the encryption key; and
(j3) if the validation is positive, processing the buffered input data.

13. A computer program comprising computer instructions enabling a processor of the input data validating device of claim 4, when the computer instructions are loaded in the processor, to carry out any of the method steps (a1) - (c1), (a2) - (d2) and (a3) - (f3) of claim 11.

14. A computer program comprising computer instructions enabling a processor of the server of claim 3, when the computer instructions are loaded in the processor, to run the server application of claim 12.
